# EUROPÄISCHE PATENTANMELDUNG

(11) **EP 0 820 698 A1**
(43) Veröffentlichungstag der Anmeldung: **28.01.1998**
(21) Anmeldenummer: 97110933.5
(22) Anmeldetag: 02.07.1997
(51) Int. Cl.: A22C 13/00

(54) **Biaxial gereckte, biologisch abbaubare und kompostierbare Wursthülle**

(30) Priorität: 26.07.1996 DE 19630236
(71) Anmelder: WOLFF WALSRODE AG, D-29655 Walsrode (DE)
(72) Erfinder: Pophusen, Dirk, 29664 Walsrode (DE); Gernot, Thomas, Dr., 27283 Verden/Aller (DE); Weber, Gunter, Dr., 29683 Fallingborstel (DE)
(74) Vertreter: Braun, Rolf, Dr.

(57) **Zusammenfassung**

Die vorliegende Erfindung betrifft eine mindestens einschichtige schlauchförmige, biaxial verstreckte, biologisch abbaubare und kompostierbare Lebensmittelhülle, insbesondere Wursthülle, wobei mindestens eine Schicht im wesentlichen aus einem thermoplastisch verarbeitbaren biologisch abbaubaren Polymer besteht.

## Beschreibung

Die vorliegende Erfindung betrifft eine schlauchförmige, biaxial gereckte, biologisch abbaubare und kompostierbare mindestens einschichtige Lebensmittelhülle, insbesondere Wursthülle, dadurch gekennzeichnet, daß mindestens eine Schicht im wesentlichen aus einem thermoplastisch verarbeitbaren biologisch abbaubaren und kompostierbaren Polymer besteht.

Kunstdärme, auch als künstlich hergestellte Wursthüllen bezeichnet, werden sowohl aus natürlichen, das heißt in der Regel aus nachwachsenden Rohstoffen wie zum Beispiel Cellulose oder Kollagen, oder aus Kunststoffen hergestellt.

Bei der Markteinführung der Wursthüllen aus Kunststoff vor rund 40 Jahren überwog der Einsatz von Polyamid, Polyester und Polyvinylidenchlorid-Mischpolymerisaten. In den folgenden Jahren wurden - dokumentiert durch diverse Patentanmeldungen - Verbesserungen dieser künstlichen Hüllen vor allem im Hinblick auf die Barriereeigenschaften und mechanischen Festigkeiten vorgenommen. Einen deutlichen Vorteil zeigen in dieser Hinsicht coextrudierte Wursthüllen mit speziell auf die Anforderungen des jeweiligen herzustellenden Wurstproduktes eingestellten Eigenschaften.

Die Herstellung von Wursthüllen aus nachwachsenden Rohstoffen ist nur über aufwendige Verfahren möglich. Kunstdärme aus Cellulose werden überwiegend nach dem 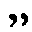 Viskose-Verfahren 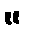 hergestellt, daß die drei Stufen Herstellung der Viskose, Herstellung des Kunstdarms aus der Viskose und schließlich die Bildung des Cellulosehydrates umfaßt. Da die Cellulose keinen Schmelzpunkt oder Schmelzbereich hat, kann sie auch nicht thermoplastisch verarbeitet werden. Das Verfahren zur Herstellung solcher Hüllen ist sehr aufwendig und teilweise sehr umweltbelastend.

Thermoplastisch verarbeitbare Kunststoffe bieten den Vorteil der Ressourcenschonung, des Umweltschutzes bezüglich Abwasser und Abluft und der deutlich geringeren Fertigungskosten.

Damit ein Kunststoff biologisch abbaubar ist, müssen es bereits die Rohstoffe sein. Nachwachsende Rohstoffe erfüllen diese Forderung naturgegeben, haben aber oft für die weiteren Anwendungen nur unzureichende Eigenschaften.

Die aus rein nachwachsenden Rohstoffen hergestellten Wursthüllen lassen sich jedoch kompostieren.

Viele synthetischen Polymere hingegen werden durch Mikroorganismen nicht oder nur äußerst langsam angegriffen. Hauptsächlich synthetische Polymere, die Heteroatome in der Hauptkette enthalten, werden als potentiell biologisch abbaubar angesehen. Eine wichtige Klasse innerhalb dieser Materialien stellen die Polyester dar. Synthetische Rohstoffe, die nur aliphatische Monomere enthalten, weisen zwar eine relativ gute biologische Abbaubarkeit auf, sind aufgrund ihrer Materialeigenschaften nur äußerst eingeschränkt anwendbar. Aromatische Polyester zeigen dagegen bei guten Materialeigenschaften deutlich verschlechterte biologische Abbaubarkeit.

Seit neuerer Zeit sind verschiedene biologisch abbaubare Polymere bekannt (siehe DE 4432161). Diese besitzen die Eigenschaft, daß sie gut thermoplastisch verarbeitbar und auf der anderen Seite biologisch abbaubar sind, d. h. deren gesamte Polymerkette von Mikroorganismen (Bakterien und Pilzen) über Enzyme gespalten und vollständig zu Kohlendioxid, Wasser und Biomasse abgebaut werden. Ein entsprechender Test in natürlicher Umgebung unter Einwirkung von Mikroorganismen, wie es u. a. in einem Kompost vorherrscht, wird u. a. in der DIN 54 900 gegeben. Diese biologisch abbaubaren Materialien können aufgrund des thermoplastischen Verhaltens zu Halbzeugen wie Gieß- oder Blasfilmen verarbeitet werden. Dennoch ist der Einsatz dieser Halbzeuge stark begrenzt. Zum einen zeichnen sich diese Filme durch schlechte mechanische Eigenschaften aus und zum anderen sind die physikalischen Sperreigenschaften hinsichtlich Wasserdampf und Gasen im Vergleich zu Filmen aus typischen, jedoch nicht biologisch abbaubaren Kunststoffen wie Polyethylen, Polypropylen oder Polyamid sehr schlecht.

Die bisher bekannten biologisch abbaubaren Werkstoffe sind aufgrund ihres Eigenschaftsprofils für die Lebensmittelhüllenanwendung ungeignet. In DE 4438961 A1 wird eine Wursthülle aus thermoplastisch verarbeitbarer Stärke beschrieben. Diese Folien zeigen aber schlechte mechanische Eigenschaften sowie geringe Wasserresistenz. Zudem ist eine starker Einfluß von Feuchtigkeit auf die mechanischen Eigenschaften vorhanden.

In EP 0569146 A2 wird eine Polyesterfolie beschrieben, bestehend aus einem biologisch abbaubaren Polyester. Die Anwendung einer solchen Folie als künstliche Lebensmittelhülle wird nicht beschrieben und ist auch nicht naheliegend. Ebenso beschreibt EP 0 708 148 A1 blasfolientaugliche Formmassen auf Basis abbaubarer aliphtischer Polyester. Auch hier wird die Anwendung künstliche Lebensmittelhülle aufgrund des mit diesen Werkstoffen nicht abzudeckenden Anforderungsprofil nicht beschrieben.

Die Anforderungen an eine Wursthülle sind je nach Anwendungsgebiet (Wustsorte) und verwendeter Wurst-Herstelltechnoligie sehr unterschiedlich. Exemplarisch sollen hier die Anforderungen für folgende wesentlichen Anwendungen dargestellt werden:

Die Anforderungen an einem Schäldarm ergeben sich vorwiegend aus der industriellen Anwendung und dem damit verbundenen hohen Automatisierungsgrad bei der Wurstherstellung. Die prinzipiell immer gerafften Wursthüllen (110 - 150 feet Rafflänge) werden einseitig verschlossen und der in sich tragende Raffstrang wird ohne Netz maschinell auf das Füllrohr geschoben. Die Portionierung (Füllgewichtseinstellung) erfolgt über die Wurstlänge, d.h. über in Ketten verankerte Messer, so daß eine sehr hohe Kaliberkonstanz erforderlich ist. Die gefüllten Würste werden anschließend in eine Räucherkammer (Temp. < 75°C, Zeit je nach Kaliber < 1 h) gebracht. Bei der Heißräucherung erfolgt eine Eigenhautbildung über Eiweißkaogulation. Nach der Umrötung folgt die sich anschließend Kühlung. Danach, meist am nächsten Tag wird der Darm automatisch abgezogen, das bedeutet, das für den Darm nur wenig Haftung zum Brät erforderlich ist (easy peel - Verhalten). Üblich ist für diese Anwendungen ein Kaliberbereich von 14 bis 32 mm.

Rohwürste werden aus grob bis mittelfein gewolften Rindfleisch, Schweinefleisch, Speck, Pökelsalz und Gewürzen ohne Zusatz von Wasser hergestellt. Nachdem die Wursthüllen mit der auf ca. -4°C gekühlten und daher sehr festen Brätmischung gefüllt sind, werden die Würste 1 bis 2 Tage bei ca. 18 bis 25°C und 98 % relativer Feuchte geschwitzt, wobei sich durch Umröten die charakteristische rote Fleischfarbe entwickelt. Danach werden die die Würste ca. 3 Tage lang bei 18 bis 20°C schwach geräuchert und anschließend bei maximal 18°C mehrere Wochen in Reiferäumen mit schwacher Luftbewegung gereift. Dabei verlieren sie zwischen 25 und 45 % ihres Gewichtes an Wasser. Eine hohe Wasserdampfdurchlässigkeit, damit bei der Reifung Wasser aus der Wurst über die Hülle diffundieren kann und dort an der Oberfläche verdunstet ist eine wesentliche Vorrausetzung einer Rohwursthülle. Hinzu kommen die Forderungen nach einer hohen Fettdichtigkeit sowie eine hohe Schrumpffähigkeit bei ausreichend Festigkeit und Elastizität. Diese Eigenschaften ergeben sich vor allem aus mit dem Wasserverlust während der Reifephase verbundenen Volumenschwund, dem die Hülle in gleichem Maße durch entsprechende Schrumpfung folgen soll.

Abgesehen von Wursthüllen aus Kollagen, die sich wegen der Verwandschaft des Materials zum Darm gut eignen, ist es bis heute ein Problem, bei Wursthüllen aus synthetischen Material für die Herstellung von Rohwurst die oben genannten Eigenschaften zu kombinieren. Im Markt durchgesetzt haben sich neben den Kollagen-Wursthüllen und mit Kollagen und/oder Gelantine imprägnierten, gewebten oder gewirkten Textilfasergerüsten in erster Linie faserverstärkte Celluloseregenerat-Wursthüllen und daneben in geringerem Umfang genähte Wursthüllen aus Baumwollgewebe durchgesetzt.

Es stellte sich daher die Aufgabe, eine Lebensmittelhülle, insbesondere Wursthülle zu erfinden, die neben den oben genannten Anforderungen die Vorteile der bekannten Hüllen vereinigt, aber zusätzlich thermoplastisch verarbeitbar und biologisch abbaubar und kompostierbar ist.

Unter den Begriffen "biologisch abbaubare und kompostierbare Polymere bzw. Folien" werden im Sinne dieser Erfindung Güter verstanden, die entsprechend der DIN 54900 aus dem Entwurf von 1996 als "vollständig biologisch abbaubar" klassifiziert werden.

Als thermoplastisch verarbeitbare biologisch abbaubare Polymere kommen dabei aliphatische oder teilaromatische Polyester, thermoplastische alphatische Polyesterurethane, aliphatisch-aromatische Polyestercarbonate und insbesondere aliphatische Polyesteramide in Frage.

Erfindungsgemäß gelang die Lösung dieser Aufgabe durch die Verwendung einer schlauchförmigen biaxial verstreckten, biologisch abbaubaren und kompostierbaren mindestens einschichtigen Lebensmittelhülle, insbesondere Wursthülle, die dadurch gekennzeichnet ist, daß mindestens eine Schicht im wesentlichen aus einem thermoplastisch verarbeitbaren biologisch abbaubaren Polymer besteht.

Durch den Einsatz einer solchen Lebensmittelhülle kann dem immer mehr an Bedeutung gewinnenden Aspekt der Ressourcenschonung ohne Nachteile in bezug auf die Produktanwendung nachgekommen werden.

Überraschenderweise hat sich gezeigt, daß eine aus solchen aus biologisch abbaubaren Polymer bestehende Folie als künstliche Lebensmittelhülle sehr gut geeignet ist und in allen Punkten den Anforderungen insbesondere einer solchen Wursthülle genügt.

Für den Erfinder war es überraschend, daß sich diese biologisch abbaubaren Polymere neben der thermoplastischen Verarbeitung auch biaxial orientieren lassen und daß sich durch diesen Orientierungsvorgang die physikalischen Eigenschaften der Folie deutlich verbessern lassen. Hierunter fällt ein deutlicher Anstieg der Festigkeit, eine Verbesserung der optischen Eigenschaften sowie eine erhöhte Barrierewirkung der Folie.

### Als Polymere sind geeignet:

Aliphatische und teilaromatische Polyester aus
A) linearen bifunktionellen Alkoholen, beispielsweise Ethylenglykol, Hexandiol oder bevorzugt Butandiol, und/oder gegebenenfalls cycloaliphatischen bifunktionellen Alkoholen, beispielsweise Cyclohexandimethanol, und zusätzlich gegebenenfalls geringen Mengen höherfunktioneller Alkohole, beispielsweise 1,2,3-Propantriol oder Neopentylglykol, sowie aus linearen bifunktionellen Säuren, beispielsweise Bernsteinsäure oder Adipinsäure, und/oder gegebenenfalls cycloaliphatischen bifunktionellen Säuren, beispielsweise Cyclohexandicarbonsäure, und/oder gegebenenfalls aromatischen bifunktionellen Säuren, beispielsweise Terephthalsäure oder Isophthalsäure oder Naphthalindicarbonsäure, und zusätzlich gegebenenfalls geringen Mengen höherfunktioneller Säuren, beispielsweise Trimellitsäure, oder
B) aus säure- und alkoholfunktionalisierten Bausteinen, beispielsweise Hydroxybuttersäure oder Hydroxyvaleriansäure, oder deren Derivaten, beispielsweise ε-Caprolacton,
oder einer Mischung oder einem Copolymer aus A und B
wobei die aromatischen Säuren nicht mehr als 50 Gew.-% Anteil bezogen auf alle Säuren ausmachen.

Die Säuren können auch in Form von Derivaten, beispielsweise Säurechloride oder Ester, eingesetzt werden.

Aliphatische Polyesterurethane aus
C) einem Esteranteil aus linearen bifunktionellen Alkoholen, beispielsweise Ethylenglykol, Butandiol, Hexandiol, bevorzugt Butandiol, und/oder gegebenenfalls cycloaliphatischen bifunktionellen Alkoholen, beispielsweise Cyclohexandimethanol, und zusätzlich gegebenenfalls geringen Mengen höherfunktioneller Alkohole, beispielsweise 1,2,3-Propantriol oder Neopentylglykol, sowie aus linearen bifunktionellen Säuren, beispielsweise Bernsteinsäure oder Adipinsäure, und/oder gegebenenfalls cycloaliphatischen und/oder aromatischen bifunktionellen Säuren, beispielsweise Cyclohexandicarbonsäure und Terephthalsäure, und zusätzlich gegebenenfalls geringen Mengen höherfunktioneller Säuren, beispielsweise Trimellitsäure, oder
D) aus einem Esteranteil aus säure- und alkoholfunktionalisierten Bausteinen, beispielsweise Hydroxybuttersäure und Hydroxyvaleriansäure, oder deren Derivaten, beispielsweise ε-Caprolacton,
oder einer Mischung oder einem Copolymer aus C) und D) und
E) aus dem Reaktionsprodukt von C) und/oder D) mit aliphatischen und/oder cycloaliphatischen bifunktionellen Isocyanaten und zusätzlich gegebenenfalls höherfunktionellen Isocyanaten, beispielsweise Tetramethylendiisocyanat, Hexamethylendiisocyanant, Isophorondiisocyanat, und gegebenenfalls zusätzlich mit linearen und/oder cycloaliphatischen bifunktionellen und/oder höherfunktionellen Alkoholen, beispielsweise Ethylenglykol, Butandiol, Hexandiol, Neopentylglukol, Cyclohexandimethanol,
wobei der Esteranteil C) und/oder D) mindestens 75 Gew.-% bezogen auf die Summe aus C), D) und E) beträgt.

Aliphatisch-aromatische Polyestercarbonate aus
F) einem Esteranteil aus linearen bifunktionellen Alkoholen, beispielsweise Ethylenglykol, Butandiol, Hexandiol, bevorzugt Butandiol, und/oder cycloaliphatischen bifunktionellen Alkoholen, beispielsweise Cyclohexandimethanol, und zusätzlich gegebenenfalls geringen Mengen höherfunktioneller Alkohole, beispielsweise 1,2,3-Propantriol oder Neopentylglykol, sowie aus linearen bifunktionellen Säuren, beispielsweise Bernsteinsäure oder Adipinsäure, und/oder gegebenenfalls cycloaliphatischen bifunktionellen Säuren, beispielsweise Cyclohexandicarbonsäure, und zusätzlich gegebenenfalls geringen Mengen höherfunktioneller Säuren, beispielsweise Trimellitsäure, oder
G) aus einem Esteranteil aus säure- und alkoholfunktionalisierten Bausteinen, beispielsweise Hydroxybuttersäure oder Hydroxyvaleriansäure, oder deren Derivaten, beispielsweise ε-Caprolacton,
oder einer Mischung oder einem Copolymer aus F) und G) und
H) einem Carbonatanteil, der aus aromatischen bifunktionellen Phenolen, bevorzugt Bisphenol-A und Carbonatspendern, beispielsweise Phosgen, hergestellt wird,
wobei der Esteranteil F) und/oder G) mindestens 70 Gew.-% bezogen auf die Summe aus F), G) und H) beträgt.

Aliphatische Polyesteramide aus
I) einem Esteranteil aus linearen und/oder cycloaliphatischen bifunktionellen Alkoholen, beispielsweise Ethylenglykol, Hexandiol oder Butandiol, bevorzugt Butandiol oder Cyclohexandimethanol, und zusätzlich gegebenenfalls geringen Mengen höherfunktioneller Alkohole, beispielsweise 1,2,3-Propantriol oder Neopentylgykol, sowie aus linearen und/oder cycloaliphatischen bifunktionellen Säuren, beispielsweise Bernsteinsäure, Adipinsäure, Cyclohexandicarbonsäure, bevorzugt Adipinsäure und zusätzliche gegebenenfalls geringen Mengen höherfunktioneller Säuren, beispielsweise Trimellitsäure, oder
K) aus einem Esteranteil aus säure- und alkoholfunktionalisierten Bausteinen, beispielsweise Hydroxybuttersäure oder Hydroxyvaleriansäure, oder deren Derivaten, beispielsweise ε-Caprolacton,
oder einer Mischung oder einem Copolymer aus I) und K) und
L) einem Amidanteil aus linearen und/oder cycloaliphatischen bifunktionellen und zusätzlich gegebenenfalls geringen Mengen höherfunktionellen Aminen, beispielsweise Tetramethylendiamin, Hexamethylendiamin, Isophorondiamin, sowie aus linearen und/oder cycloaliphatischen bifunktionellen Säuren und zusätzlich gegebenenfalls geringen Mengen höherfunktioneller Säuren, beispielsweise Bernsteinsäure oder Adipinsäure, oder
M) aus einem Amidanteil aus säure- und aminfunktionalisierten Bausteinen, bevorzugt ω-Laurinlactam und besonders bevorzugt ε-Caprolactam,
oder einer Mischung aus L) und M) als Amidanteil,
wobei der Esteranteil I) und/oder K) mindestens 30 Gew.-% bezogen auf die Summe aus I), K), L) und M) beträgt.

Die erfingungsgemäßen biologisch abbaubaren und kompostierbaren Rohstoffe können mit Verarbeitungshilfsmitteln und Additiven, wie beispielsweise Nukleierungsmitteln (beispielsweise 1,5-Naphthalindinatriumsulfonat), Stabilisatoren oder Gleitmitteln, ausgestattet sein.

Gegenstand der Erfindung ist das Verfahren zur Herstellung einer solchen schlauchförmigen, biaxial verstreckten, biologisch abbaubaren und kompostierbaren Lebensmittelhülle.

Die Herstellung der erfindungsgemäßen Schlauchfolie geschieht zweckmäßig über ein Extrusionsverfahren. Der in Granulatform vorliegende Rohstoff wird in einem Extruder aufgeschmolzen, homogenisiert, komprimierert und über eine Düse ausgetragen. Dabei kann es sich bei der Düse um eine Ringdüse zur Herstellung eines nahtlosen Schlauchfilms handeln. Der so ausgetragene bzw. z.B. mittels Walzenpresseuren ausgezogene Film wird anschließend bis zur Verfestigung abgekühlt. Die Kühlung kann dabei sowohl über Luft als auch über Wasser oder auch mittels Kühlwalzen erfolgen. Die Kühlung kann dabei einseitig oder beidseitig, im Falle einer Schlauchfolie innen- und außenseitig oder nur innen- oder nur außenseitig erfolgen. Der sogenannte Primärschlauch wird anschließend bei teilkristallinen Werkstoffen unter Kristallitschmelztemperatur und bei amorphen Werkstoffen oberhalb der Glasübergangstemperatur temperiert und dann simultan idealerweise biaxial verstreckt. Ein besonders geeignetes Verfahren ist dabei das simultane biaxiale Recken mittels Double-Bubble-Technologie, bei der die Verstreckung einer Primärblase über einen anliegenden Innendruck erfolgt. Die Verstreckung erfolgt mit einem Flächenreckgrad zwischen 5 und 50, insbesondere zwischen 15 und 25. Der Flächenreckgrad ist dabei das Produkt aus dem erzielten Querreckgrad und Längsreckgrad. Die Querverstreckung wird durch die anliegende Druckdifferenz zwischen Innendruck und dem äußeren Umgebungsdruck bewirkt, die Längsverstreckung wird zusätzlich auch durch eine Differenzgeschwindigkeit der angreifenden Walzenpresseure bewirkt. Zur gezielten Einstellung von Schrumpfeigenschaften kann die Folie anschließend einer Wärmebehandlung unterzogen werden. Die Folie kann in diesem Fixierprozess wieder bis kurz unter die Kristallitschmelztemperatur erwärmt werden.

Zur Verbesserung der Bräthaftung kann die Folie später oder direkt in-line auf der später zum Brät liegenden Seite oberflächenvorbehandelt werden. Ebenso kann eine außenseitige Oberflächenbehandlung erfolgen, um zum Beispiel die Bedruckbarkeit zu verbessern. Die Vorbehandlungen können dabei mittels Corona, einer Flamme, einem Plasma oder einem oxidativen Stoff oder Stoffgemisch durchgeführt werden, so daß sich ein Anstieg der Oberflächenspannung ≥ 30 mN/mm auf den Folienflächen ergibt.

Die relevanten Eigenschaften der nachfolgend beschriebenen Lebensmittelhüllen werden nach folgender Methodik ermittelt:

Die 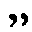 biologische Abbaubarkeit 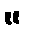 thermoplastischer Kunststoffe und Folienprodukte, d.h. die Kompostierbarkeit kann über den Controlled Composting Test (CCT) nachgewiesen werden. Für einen solchen Test wird das Material mit Kompost vermischt und in einem temperierten Laborkomposter gelagert. Während des Verrottungsprozesses wird die CO₂-Entwicklung, die entstehende Biomasse und die Menge an nicht abgebautem Polymer überwacht. Bei der Restpolymeranalytik ergab sich, daß keinerlei Kunststoffreste oder Abbauprodukte im Kompost verbleiben. Die Kompostierbarkeit wurde entsprechend der Prüfvorschrift des DIN-Normenentwurfs DIN 54 900 Teil 3 von 1996 durchgeführt. Aufgrund der Untersuchungsergebnisse erfolgt entsprechend den DIN-Vorgaben die Einstufung der Folienmuster in die entsprechende Klasse.

Die Permeationswerte von Wasserdampf und Sauerstoff werden standardisiert nach DIN 53122 bzw. nach DIN 53380 ermittelt.

Die mechanischen Kennwerte, wie Elastiziätsmodul, Reißfestigkeit und Reißdehnung enstammen aus Standard-Zugprüfungen nach DIN 53457 und DIN 53455.

Die Schrumpfeigenschaften wurden nach DIN 53377 ermittelt.

Die anwendungstechnischen Praxistests wurden in einer Versuchsmetzgerei durchgeführt. Zur anwendungstechnischen Eignung wurden die relevanten Eigenschaften verschiedener Hüllen mittels eines Schulnotensystems beurteilt, wobei die Note 1 das beste Ergebnis bescheibt und die Note 6 das Schlechteste. Die herangezogenen Kriterien sind das Füllverhalten, die Kaliberkonstanz, die Faltenfreiheit und die Schälbarkeit.

Der Gegenstand der Erfindung soll anhand der folgenden Beispiele näher erläutert werden.

### Beispiele:

Die nachfolgend tabellarisch aufgeführten drei Beispiele wurden anhand biaxial verstreckter Schlauchfolien, Durchmesser 60 mm, realisiert, die nach dem oben näher erläuterten Verfahren hergestellt wurden. Verwendet wurrde ein biologisch abbaubares Polyesteramid mit einer Schmelzviskosität von 250 Pas bei 190°C (gemessen nach DIN 54811 - B) sowie einem Schmelzpunkt von 125°C gemessen nach ISO 3146 / C2.

Verwendet wurde weiterhin eine Kreisringdüse zur Herstellung eines Primärschlauches. Dieser wurde in ein auf ca. 10°C temperiertes Wasserbad gefahren und anschließend auf eine zur biaxialen Verstreckung geeignete Recktemperatur mittels Heißluft erwärmt. Die biaxiale Verstreckung erfolgt durch das Injizieren von Druckluft.

Die aufgewickelten Schlauchfolien werden anschließend zu Raffraupen mit einer Länge von ca. 25-30 m auf Standardraffmaschinen konfektioniert.

Die in den oben genanten Beispielen aufgeführten Hüllen wurden in einem Praxistest anwendungstechnisch erprobt. Die hergestellten Würste reiften einwandfrei und ließen sich gut schälen.

Die Verfahrensparamter zur Herstellung sowie die anwendungstechnischen Beurteilung wird in folgender Tabelle zusammenfassend wiedergegeben:

| **Beispiel** | | **1** | **2** | **3** |
|---|---|---|---|---|
| **Rohstoffklasse** | | Polyesteramid | Polyesteramid | Polyesteramid |
| **Typebezeichnung** | | BAK 1095 | BAK 1095 | BAK 1095 |
| **Hersteller** | | Bayer AG | Bayer AG | Bayer AG |
| | | | | |
| **Primärschlauchdurchmesser** | *mm* | 20 | 12 | 13 |
| **Querreckgrad** | - | 3 | 5 | 4,5 |
| **Längsreckgrad** | - | 4,5 | 3,75 | 4,5 |
| **Flächenreckgrad** | - | 14 | 19 | 20 |
| **Reckblasendurchmesser** | *mm* | 60 | 60 | 58,5 |
| **Liegebreiteschlauchfolie** | *mm* | 38 | 38 | 37 |
| **Gesamtdicke** | *µm* | 40 | 51 | 38 |
| | | | | |
| **Füllverhalten** | *(1-6)* | 1 | 1 | 1 |
| **Füllkaliber** | *mm* | 64 | 63 | 65 |
| **Kaliberkonstanz** | *(1-6)* | 2 | 1 | 3 |
| **Faltenfreiheit / Schrumpfverhalten** | *(1-6)* | 1 | 1 | 2 |
| **Schälbarkeit** | *(1-6)* | 2 | 1 | 1 |
| **biologische Abbaubarkeit CCT; Kompostierbarkeit nach D** | - | ist gegeben | ist gegeben | ist gegeben |
| **Elastizitätsmodul längs/quer** | *MPa* | 292 / 260 | 226 / 292 | 250 / 260 |
| **Reißfestigkeit längs/quer** | *MPa* | 109 / 105 | 90 / 109 | 100 / 105 |
| **Reißdehnung längs/quer** | *%* | 111 / 165 | 224 / 111 | 170 / 165 |
| **Schrumpf bei 100 °C quer/längs** | *%* | 20 / 25 | 30 / 25 | 27 / 27 |
| **Sauerstoffpermeation 23 °C 0%r.F.** | *cm3/m2dbar* | nicht gemessen | 384 | nicht gemessen |
| **Wasserdampfpermeation 23 °C 0%r.F.** | *g/m2d* | nicht gemessen | 200 | nicht gemessen |

## Patentansprüche

1. Mindestens einschichtige schlauchförmige, biaxial verstreckte, biologisch abbaubare und kompostierbare Lebensmittelhülle, insbesondere Wursthülle, dadurch gekennzeichnet, daß mindestens eine Schicht im wesentlichen aus einem thermoplastisch verarbeitbaren biologisch abbaubaren Polymer besteht.

2. Lebensmittelhülle nach Anspruch 1, dadurch gekennzeichnet, daß es sich bei dem thermoplastisch verarbeitbaren biologisch abbaubaren Polymer um aliphatische oder teilaromatische Polyester, thermoplastische alphatische Polyesterurethane, aliphatisch-aromatische Polyestercarbonate und insbesondere um aliphatische Polyesteramide handelt.

3. Lebensmittelhülle nach einem der vorhergehenden Ansprüche, dadurch gekennzeichnet, daß die bei der Herstellung der Lebensmittelhülle verwendeten polymeren Werkstoffe in den Schmelzezustand überführt werden, über eine Düse ausgetragen werden, danach bis zur Verfestigung abgekühlt und anschließend biaxial verstreckt werden.

4. Lebensmittelhülle nach einem der vorhergehenden Ansprüche, dadurch gekennzeichnet, daß die biaxial verstreckte Lebensmittelhülle aus biologisch abbaubaren Polymer mit einem Flächenreckgrad zwischen 5 und 50, insbesondere 15 bis 25 hergestellt wird.

5. Lebensmittelhülle nach einem der vorhergehenden Ansprüche, dadurch gekennzeichnet, daß die Lebensmittelhülle mehrschichtig coextrudiert wird.

6. Lebensmittelhülle nach einem der vorhergehenden Ansprüche, dadurch gekennzeichnet, daß die biologisch abbaubaren und kompostierbaren thermoplastisch verarbeitbaren Polymere mit anderen Polymeren geblendet werden.

7. Lebensmittelhülle nach einem der vorhergehenden Ansprüche, dadurch gekennzeichnet, daß die Lebensmittelhülle mit organischen oder anorganischen Additiven augestattet ist.

8. Lebensmittelhülle nach einem der vorhergehenden Ansprüche, dadurch gekennzeichnet, daß sie nach den bekannten Bedruckungs- und Konfektionierungsverfahren weiterverarbeitet wird, insbesondere zu Raffraupen oder Abschnitten oder zu einem Kranzdarm konfektioniert wird.

9. Lebensmittelhülle nach einem der vorhergehenden Ansprüche, dadurch gekennzeichnet, daß innen und/oder außen auf die Lebensmittelhülle eine Imprägnierung oder Beschichtung aufgebracht wird.
